# EUROPÄISCHE PATENTSCHRIFT

(11) **EP 0 647 294 B1**
(45) Veröffentlichungstag und Bekanntmachung des Hinweises auf die Patenterteilung: **18.12.1996**
(21) Anmeldenummer: 92913681.0
(22) Anmeldetag: 20.06.1992
(51) Int. Cl.: F16B 19/08

(54) **SELBSTBOHRHOHLNIET**
SELF-DRILLING HOLLOW RIVET
RIVET TUBULAIRE AUTOFOREUR

(43) Veröffentlichungstag der Anmeldung: 12.04.1995
(73) Patentinhaber: MAGE AG, CH-1791 Courtaman (CH); GEHRING, Manfred, D-72250 Freudenstadt (DE)
(72) Erfinder: SPONER, Wolfgang, CH-1700 Fribourg (CH)
(74) Vertreter: KOHLER SCHMID + PARTNER
(86) Internationale Anmeldenummer: EP9201394
(87) Internationale Veröffentlichungsnummer: WO9400701

(56) Entgegenhaltungen:
- EP-A- 0 384 087
- CH-A- 673 792
- DE-A- 1 775 430
- DE-A- 2 328 447
- DE-A- 2 554 577
- US-A- 3 935 786

## Beschreibung

Die Erfindung geht aus von einem Selbstbohrhohlniet, bestehend aus einer Niethülse, die an einem Ende einen Setzkopf aufweist, und am anderen Ende als Schließkopf ausbildbar ist, mit einem die Niethülse axial durchsetzenden Bohrerschaft der beidseits einer Sollbruchstelle Rotationsnehmer aufweist, und einenends mit einem Bohrkopf und anderenends am Bohrerschaft mit Zugmitnehmern für eine Setzvorrichtung versehen ist, wobei sich der Bohrkopf zur Niethülse bzw. zum Niethülsenabschnitt hinweisend verjüngt.

Ein derartiger Selbstbohrhohlniet ist durch die DE-OS 2554577 bekanntgeworden.

Mit derartigen Nieten werden Bauteile aus gleichen oder verschiedenen Werkstoffen unlösbar miteinander verbunden. Niete haben dabei gegenüber anderen Verbindungsmitteln den Vorteil, daß sich zu verbindende Bauteile nicht verziehen und keine Gefügeumwandlungen wie beim Schweißen entstehen können. Bauteile aus nicht gleichartigen Werkstoffen lassen sich problemlos dauerhaft und sicher miteinander verbinden. Es lassen sich mittels moderner Nietsysteme kostengünstige Verbindungen für höchste Ansprüche herstellen.

Der bekannte Selbstbohrhohlniet weist Rotationsmitnehmer beiderseits einer Sollbruchstelle auf, die aus parallel gegenüberliegenden und in Längsrichtung verlaufenden glatten Flächen des Bohrerschafts bestehen. Die glatten Flächen des Bohrerschafts liegen dicht an entsprechenden Gegenflächen der Niethülse an. Wird nun der Bohrerschaft gedreht, so dreht sich auch die Niethülse.

Am anderen Ende des Bohrerschaftes, das dem Bohrkopf gegenüber liegt, sind Zugmitnehmer ausgebildet, um den Bohrerschaft mit großer Zugkraft durch die Niethülse hindurch entgegen einer Gegenkraft, die vom Bohrkopf erzeugt wird, durch die Niethülse hindurchzuziehen. Bei diesem Zugvorgang wird die Niethülse deformiert und es bildet sich ein Schließkopf aus. Zugleich reißt der Bohrerschaft an der vorgesehenen Sollbruchstelle und der Bohrkopf fällt aus dem Schließkopf heraus. Die Rotationsmitnehmer beiderseits der Sollbruchstelle sind deshalb vorgesehen, damit ein Drehmoment, das beim Bohrvorgang erzeugt wird ohne Bruch des Bohrerschafts auf dem Bohrkopf übertragen werden kann.

Damit die Übertragung des Drehmoments auf den Bohrkopf und die Entlastung der Sollbruchstelle zufriedenstellend gelingt, müssen die parallelen Flächen des Bohrerschafts exakt und spielfrei an den Gegenflächen der Niethülse anliegen. Dies ist besonders für Anwendungen notwendig, bei denen die Drehrichtung des Bohrers gewechselt werden muß. Daher ist der bekannte Selbstbohrhohlniet aufwendig und teuer zu fertigen.

Da die Nietaußenwand möglichst dicht an einer Innenwand eines Gegenstands, in den der Niet eingesetzt wird, anhängen soll, bedeutet dies die Überwindung eines Reibungswiderstands. Durch das Drehen des Bohrerschafts müssen die Rotationsmitnehmer des bekannten Selbstbohrhohlniets schon beim Drehen fest zupacken, da sowohl der Bohrwiderstand als auch der Reibungswiderstand zwischen Niethülse und anliegender Wand überwunden werden muß. Aus diesem Grund wird die Sollbruchstelle nicht ausreichend entlastet.

Weiterhin wird durch den zwischen dem Ende der Niethülse und dem Bohrkopf gebildeten Absatz sichergestellt, daß sich der Bohrkopf beim Setzvorgang nicht in die Niethülse hineinziehen kann. Deshalb hängt der Bohrkopf nach dem Setzvorgang entweder noch lose in der Niethülse oder er fällt aus dem Schließkopf heraus.

Der ausgebildete Absatz besitzt aber den Nachteil, daß ein Zurückziehen beim Setzen des Niets und bei der Ausbildung des Schließkopfes zu einer Rißbildung in der Niethülse führt.

Außerdem hat der bekannte Selbstbohrhohlniet den weiteren Nachteil, daß die Rotationsmitnehmer schon bei der Herstellung und Fertigung ausgebildet werden müssen.

Die Rotationsmitnehmer des Bohrerschafts und ihre entsprechende Ausnehmungen in der Niethülse erfordern eine aufwendige Vororientierung vor jedem Bohrvorgang.

Aus der US-A 3,935,786 ist ein weiterer Selbstbohrhohlniet bekannt, bei dem die Rotationsmitnehmer aus aufwendig zu fertigenden Längsrippen (am Bohrerschaft) und entsprechenden Ausnehmungen in der Niethülse bestehen.

Der Selbstbohrhohlniet ist ebenfalls über den Bohrerschaft antreibbar.

Ein über den Setzkopf antreibbarer Selbstbohrhohlniet ist aus der DE-OS 2554577 bekannt, wobei die Rotationsmitnehmer nicht beiderseits der Sollbruchstelle ausgebildet sind.

Dem neu vorgelegten Schutzbegehren liegt daher die Aufgabe zugrunde, einen Niet eingangs genannter Art dahingehend weiterzubilden, daß der Bohr- und Setzvorgang sicher ohne Ausschuß erfolgen kann und daß die Nietverbindung eine dichte Verbindung darstellt.

Diese Aufgabe wird erfindungsgemäß dadurch gelöst, daß die Rotationsmitnehmer sich in das Material der Niethülse eindrücken, daß die Rotationsmitnehmer absatzfrei an die Verjüngung des Bohrkopfes angrenzen, daß der Setzkopf am Außenumfang mindestens zwei abgeflachte Flächen aufweist, die parallel zur Ebene einer Bohrerachse verlaufen, und daß die Rotationsmitnehmer als Rippen ausgebildet sind, die einen dreieckförmigen Querschnitt aufweisen und in Längsrichtung über nahezu die gesamte Länge gleichmäßig weit von der Oberfläche des Bohrerschaftes beabstandet sind, und daß der Bohrerschaft in der Niethülse unverlierbar gehalten ist.

Mit dem erfindungsgemäßen Selbstbohrhohlniet kann der Bohrvorgang sicher deshalb abgeschlossen werden, weil die Setzvorrichtung den Setzkopf am Außenumfang breitflächig form- und kraftschlüssig umgreifen kann. Das beim Bohrvorgang entstehende Drehmoment wird über die beidseits der Sollbruchstelle ausgeformten Rotationsmitnehmer sicher übertragen, ohne daß im Bereich der Sollbruchstelle eine ungewollte Abscherung schon während des Bohrvorgangs am Bohrerschaft auftritt. Da sich die Rotationsmitnehmer in das Material der Niethülse eindrücken, entfällt die fertigungstechnische Ausbildung von Ausnehmungen in der Niethülse. Ebenso müssen Niethülse und Bohrerschaft nicht mehr vor dem Setzvorgang vororientiert werden. Ist der Bohrvorgang beendet, so kann der Selbstbohrhohlniet sicher gesetzt werden und über die absatzfreie konische Verjüngung am Bohrkopf ist sicher gestellt, daß die Niethülse beim Setzvorgang je nach vorgegebener Konizität ohne Rißbildung sicher geweitet und zum Schließkopf ausgebildet wird. Dabei wird der Bohrkopf in die Niethülse hineingezogen, so daß die Niethülse nahezu vollkommen den Bohrkopf umgreift. Dadurch wird der Schließkopf stabilisiert und dicht verschlossen. Der Bohrerschaft reißt erst dann an der vorgesehenen Sollbruchstelle, wenn der Bohrkopf in die Niethülse hineingezogen worden ist und dort unverlierbar mit der Niethülse eine Verbindung eingeht.

Die Rippen haben den Vorteil, daß einerseits nicht ungewollt der Bohrer aus der Niethülse herausfallen kann und andererseits werden die beim Bohrvorgang auftretenden Rotationskräfte gleichmäßig von der Niethülse auf den Bohrerschaft übertragen. Ist der erfindungsgemäße Selbstbohrhohlniet mit Rotationsmitnehmern sowohl beidseits der Sollbruchstelle als auch am Außenumfang des Setzkopfes ausgebildet, so ist es beim Bohrvorgang nicht notwendig, daß der Bohrerschaft direkt angetrieben wird. Es ist ausreichend, wenn die Niethülse über den Setzkopf, das heißt, über die daran mindestens vorgesehenen zwei abgeflachten Flächen, in Rotationsbewegung gebracht wird.

Auch schon vor dem Setzvorgang stellen die Rotationsmitnehmer sicher, daß die Niethülse und der Bohrer, bestehend aus dem Bohrkopf und dem Bohrerschaft, eine fest zusammengesteckte Einheit darstellen.

Über die parallel zur Niethülse verlaufenden Flächen am Setzkopf kann die Setzvorrichtung bestmöglich Rotationskräfte übertragend am Selbstbohrhohlniet angreifen.

In weiterer Ausgestaltung der Erfindung ist der Bohrerschaft und der Bohrkopf einstückig gefertigt und sowohl der Bohrkopf wie auch der Bohrschaft besteht aus einem gehärteten Material.

Dies hat den Vorteil, daß beim Bohrvorgang selbst keine weiteren Schwachstellen am Bohrer ausgebildet sind. Nur an der Sollbruchstelle kann der Bohrer abbrechen, sofern die Zugkräfte ein vorbestimmtes Maß überschreiten. Ist der Bohrerschaft einheitlich wie der Bohrkopf gehärtet, so kann er auch größere Belastungen während des Bohrvorgangs ohne Schaden überstehen.

In einer weiteren Ausgestaltung der Erfindung ist an einer Innenwand der Niethülse bzw. des Niethülsenabschnitts ein Dichtfilm vorgesehen und unterhalb des Setzkopfes ist eine Dichtung angeordnet. Dies hat den Vorteil, daß die Nietverbindung noch weiter abgedichtet werden kann, sofern dafür ein Bedarf besteht.

Mit dem konisch ausgebildeten Bohrkopf ist es möglich, den Selbstbohrhohlniet in einem Arbeitsvorgang nicht nur zu setzen, sondern auch dauerhaft und sicher zu spreizen. Der erfindungsgemäße Hohlniet wird aufgrund einer gegenüber der Niethülse vollzogenen Relativbewegung des Bohrerschaftes im Schließkopfbereich so stark gespreizt, daß die Niethülse nicht nur das Nietloch über die gesamte Länge formschlüssig ausfüllt, sondern die Niethülse ist auch am Ende mit dem Schließkopf so geweitet, daß der Bohrkopfabschnitt mit dem konisch verlaufenden Querschnitt das Nietloch dauerhaft verschließt.

Der erfindungsgemäße Selbstbohrhohlniet entspricht damit allen erweiterten Anforderungen, die im Stahlhochbau, Kranbau und Brückenbau bei Trägeranschlüssen, Stützen, Knotenpunkten in Stahlfachwerken von Dachbindern und Krantragwerken, bei Vollwandträgern, im Behälterbau und bei Haftverbindungen im Karosserie-, Wagen- und Flugzeugbau gestellt werden. Insbesondere kann der erfindungsgemäße Selbstbohrhohlniet besonders vorteilhaft im Fassadenbau und im Dachbereich eingesetzt werden. Blechüberlappungen jedweder Art lassen sich sicher und schnell verbinden. Der Selbstbohrhohlniet läßt sich nicht nur leicht handhaben, er kann schnell und sicher verarbeitet werden und kann mit allen bekannten Setzkopfformen versehen sein. Mit dem Selbstbohrhohlniet läßt sich eine flüssigkeitsdichte Nietverbindung schaffen. Weiterhin können am Bohrerschaft bzw. im Bereich der Rotationsmitnehmer, die benachbart zum Bohrkopf angeordnet sind, noch Haltenuten ausgebildet sein, in die beim Setzvorgang plastisch verformtes Material der Niethülse einfließt, und zwischen dem Bohrkopf und dem Schließkopf entsteht noch eine stärkere Verbindung.

Weist der Bohrerschaft selbst eine dreieckförmige Querschnittsform auf, so hat dies den Vorteil, daß der Bohrerschaft in der Setzvorrichtung beim Bohrvorgang nicht rutschen, d.h. sich nicht ungewollt verdrehen bzw. durchdrehen kann, und mit der dreiecksförmigen Querschnittsform ist auch sichergestellt, daß die daran angepaßte Niethülse den Bohrerschaft beim Bohrvorgang sicher antreibt.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert.

Es zeigen:
- Fig. 1: einen erfindungsgemäßen Selbstbohrhohlniet mit einer Niethülse im Schnitt zwischen einem ersten und einem zweiten Bauteil;
- Fig. 2: einen gesetzten und verschlossenen Selbstbohrhohlniet nach Fig. 1;
- Fig. 3: einen Niethülsenabschnitt eines Selbstbohrhohlniets im Querschnitt mit einem Bohrerschaft, der beidseits einer Sollbruchstelle Halte- und Rotationsmitnehmer aufweist;
- Fig. 4: eine weitere Ausführungsform eines erfindungsgemäßen Selbstbohrniets mit einem seitlich abgeflachten Setzkopf und einem Bohrerschaft der Mitnehmer aufweist, die in die Niethülse eingreifen;
- Fig. 4a: eine Ansicht gemäß IVa - IVa der Fig. 4;
- Fig. 5: eine weitere Ausführungsform eines erfindungsgemäßen Selbstbohrhohlniets mit einem im Querschnitt ovalen Schaft;
- Fig. 5a: eine Ansicht Va - Va der Fig. 5;
- Fig. 6: eine weitere schematische Darstellung eines erfindungsgemäßen Setzkopfes.

Die einzelnen Figuren der Zeichnung zeigen den erfindungsgemäßen Gegenstand stark schematisiert und sind nicht maßstäblich zu verstehen. Die Gegenstände der einzelnen Figuren sind teilweise stark vergrößert dargestellt, damit ihr Aufbau besser gezeigt werden kann. Die Schneidflächen des Bohrkopfes sind stark vereinfacht dargestellt.

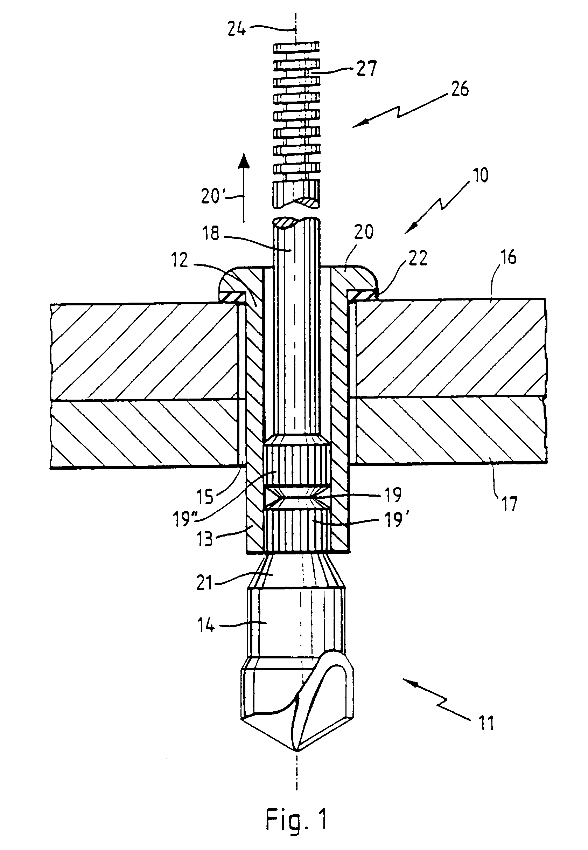

Fig. 1 zeigt einen Selbstbohrhohlniet 10, der im Querschnitt dargestellt ist und einen Bohrer 11 geführt hält. Eine Niethülse 12 weist ein Schaftende 13 auf, das zu einem Bohrkopf 14 hin gerichtet ist. Das Schaftende 13 grenzt an den Bohrkopf 14. Mit dem Bohrkopf 14 wird ein Nietloch 15 in ein erstes Bauteil 16 und ein zweites Bauteil 17 gebohrt, die unlösbar miteinander verbunden werden sollen. Der Bohrkopf 14 weist im Ausführungsbeispiel der Fig. 1 einen Durchmesser auf, der geringfügig größer als der Außendurchmesser der Niethülse 12 ist. Beim Schließen des gesetzten Selbstbohrhohlniets 10 wird die Niethülse 12 in Richtung der wirkenden Schließkraft plastisch verformt und der Niethülsenwerkstoff kann in den Freiraum zwischen Niethülsen-Außendurchmesser und Nietloch-Durchmesser fließen. Im Ausführungsbeispiel der Fig. 1 weist der Bohrer 11 einen Bohrerschaft 18 auf, der mehr oder weniger weit vom Bohrkopf 14 entfernt mit einer Sollbruchstelle 19 versehen ist. Beidseits der Sollbruchstelle 19 sind als Längsrippen 19', 19" rechteckförmig ausgebildete Rotationsmitnehmer für den Bohrvorgang ausgebildet, die sich form- und kraftschlüssig in die Innenwand der Niethülse 12 eindrücken, wenn der Bohrer 11 bei der Herstellung der Selbstbohrhohlniet in die Niethülse 12 eingezogen wird. Über die Längsrippen 19', 19" ist der Bohrer 11 unverlierbar mit der Niethülse 12 verbunden. Werden nun am Setzkopf 20 nicht dargestellte Hilfswerkzeuge, beispielsweise eine Setzvorrichtung, derart angesetzt, daß zum einen der Setzkopf 20 in Richtung erstes Bauteil 16 gedrückt und zum anderen der Bohrerschaft 18 in Pfeilrichtung 20' gezogen wird, wobei in Pfeilrichtung 20' die Schließkraft wirkt, so kann der Bohrkopf 14 in die Niethülse 12 hineingezogen werden. Über eine am Bohrkopf 14 ausgebildete ringförmige konische Fläche 21 gleitet der Bohrkopf 14 in das Schaftende 13 ein und Material der Niethülse 12 umgreift den Bohrkopf 14. Über die konisch ausgebildete Fläche 21 wird das Schaftende 13 vorsichtig und gleichmäßig geweitet, so daß das Material des Schaftendes 13 ohne Rißbildung den Bohrkopf 14 ummanteln kann. Die konisch ausgebildete Fläche 21 und die Oberfläche aller Längsrippen 19' können mit einem Dichtungsfilm beschichtet sein. Ebenfalls ist an der Fläche des Setzkopfes 20, die zum ersten Bauteil 16 weist, eine Dichtung 22 angebracht. Die Innenwand der Niethülse 12 kann ebenfalls dichtungsfilmbeschichtet sein.

In der Fig. 1 ist noch ein Abschnitt 26 des Bohrerschaftes 18 gezeigt, der mit beispielhaft zu verstehenden Ringnuten 27 versehen ist. In die Ringnuten 27 können Greifklauen eines Setzgerätes eingreifen, damit eine definierte Kraftkomponente in Pfeilrichtung 20' erzielbar ist. Der Bohrer 11, bestehend aus Bohrerschaft 18 und Bohrkopf 14, ist einstükkig gefertigt, und das Material, aus dem der Bohrer 11 besteht, ist einheitlich gehärtet.

Am Außenumfang des Setzkopfes 20 sind längs- und achsparallel zur Niethülse 12, bevorzugt über die gesamte Materialdicke des Setzkopfes 20 verlaufend, Flächen vorgesehen, die ebenfalls als Rotationsmitnehmer für den Selbstbohrhohlniet 10 dienen. Diese in der Fig. 1 nicht gezeigten Flächen werden von der Setzvorrichtung form- und kraftschlüssig umgriffen und beim Bohrvorgang rotiert der Selbstbohrhohlniet 10 mit. Die rotierende Niethülse 12 kann auch den Bohrerschaft 18 antreiben, so daß der Bohrerschaft 18 nicht unbedingt unmittelbar selbst angetrieben werden muß.

Weiterhin können im Bereich des Bohrkopfes 14 oder im Bereich der Längsrippen 19' Haltenuten ausgebildet sein, die den Bohrkopf 14 in der Niethülse 12 unverlierbar zusätzlich fixieren. Eine besondere Sicherung stellen diese Haltenuten bei gesetztem Niet dar.

In der Fig. 1 ist mit 24 die Bohrerachse eingezeichnet.

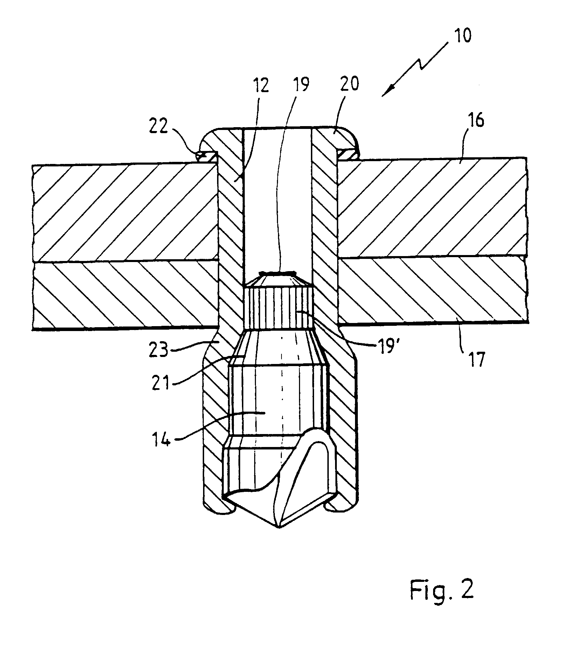

Fig. 2 zeigt den Selbstbohrhohlniet 10 in gesetztem und abgeschlossenem Zustand, nachdem der Bohrerschaft 18, wie in der Fig. 1 dargestellt, in Pfeilrichtung 20' so stark gezogen wurde, daß der Bohrerschaft 18 an der Sollbruchstelle 19 abgerissen ist. Das vom Setzkopf 20 abgewandte Ende der Niethülse 12 hat sich als Wulst 23 ausgebildet und bildet den Schließkopf. Der Schließkopf übergreift das zweite Bauteil 18 und umgreift formschlüssig den Bohrkopf 14. Im Hohlraum des Selbstbohrhohlniets 10 bleibt der Bohrkopf 14 zurück, der den Schließkopf stabilisiert. Das erste Bauteil 16 ist damit unlösbar mit dem zweiten Bauteil 17 verbunden. Die Niethülse 12 wurde über die konisch verlaufende Fläche 21 aufgeweitet und die Längsrippen 19' haben sich noch stärker in die Innenwand der Niethülse 12 eingedrückt.

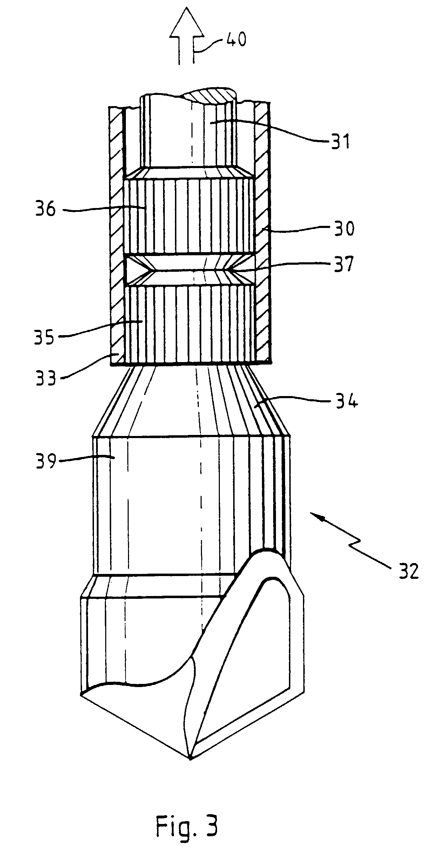

Fig. 3 zeigt einen Niethülsenabschnitt 30 im Querschnitt, beispielsweise den Niethülsenabschnitt 30 eines Selbstbohrhohlniets. Im Niethülsenabschnitt 30 ist ein Bohrerschaft 31 gehalten, an den sich ein Bohrkopf 32 anschließt. Der Bohrkopf 32 ist außerhalb eines Endes 33 des Niethülsenabschnitts 30 angeordnet. Nach außen vom Ende 33 wegweisend schließt sich an den Bohrerschaft 31 eine konische Erweiterung 34 an. Innerhalb des Niethülsenabschnitts 30 sind am Bohrerschaft 31 Längsrippen 35, 36 als Rotationsmitnehmer ausgebildet, die zusätzlich den Niethülsenabschnitt 30 und den Bohrerschaft 31 zusammenhalten. Eine weitere Profilierung 37 ist am Bohrerschaft 31 ausgebildet. Die Profilierung 37 ist als Sollbruchstelle dimensioniert.

Am Bohrkopf 32 selbst ist ein Flächenabschnitt 39 vorgesehen, der, sofern der Bohrerschaft 31 in Pfeilrichtung 40 zurückgezogen wird, mit dem Ende 33 des Niethülsenabschnitts 30 zusammenwirkt. Das Ende 33 fließt unter plastischer Verformung um den Bohrkopf 32 herum und die beiden Teile, der Bohrkopf 32 und der Niethülsenabschnitt 30, bilden eine unlösbare Verbindung. Über den Bohrkopf 32 und die Längsrippen 35 wird der Hohlraum des Niethülsenabschnitts 30 abgedichtet.

Die in der Fig. 3 gezeigten konischen Erweiterungen am Bohrkopf 32 können unterschiedliche Winkel für das Maß der Erweiterung aufweisen. Der Bohrerschaft 31 kann, und dies ist in der Figur nicht gezeigt, an dem dem Bohrkopf 32 entgegengesetzten Ende Ausgestaltungen aufweisen, die es erlauben, daß eine nicht beschriebene Setzvorrichtung am Bohrerschaft 31 kraft- und formschlüssig angreifen kann. Der Bohrerschaft 31 ist aus einem gehärteten Material hergestellt. Der Bohrerschaft 31 und der Bohrkopf 32 sind aus einem einstückigen Material (mono-metal) hergestellt.

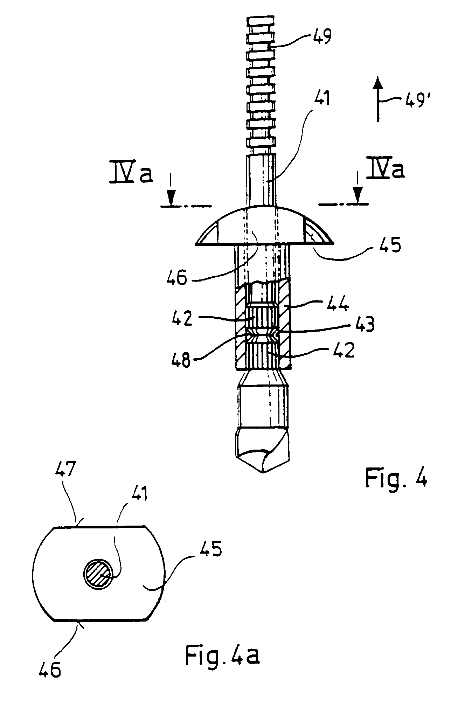

Fig. 4 zeigt ein weiteres Ausführungsbeispiel eines erfindungsgemäßen Selbstbohrhohlniets mit einem Bohrerschaft 41, an dem im Bereich der Bohrspitze Rippen 42 als Rotationsmitnehmer ausgebildet sind, die in die Innenwand 43 einer Niethülse 44 eingreifen. Durch den Eingriff der Rippen 42, die als Führungsrippen ausgebildet sein können, ist die Niethülse 44 mit dem Bohrerschaft 41 kraftschlüssig verbunden. Wird nun die Niethülse 44 in Drehung versetzt, so dreht sich auch der Bohrerschaft 41 mit der Bohrspitze. Dazu ist am Setzkopf 45 eine erste Fläche 46 und eine zweite Fläche 47 ausgebildet, an denen Hilfswerkzeuge für die Drehbewegung ansetzbar sind. Zwischen den Rippen 42, in Längsrichtung gesehen, ist eine Profilierung 48 als Sollbruchstelle vorgesehen. Mitnehmer 49 sind am Bohrerschaft 41 vorgesehen, damit Zugkräfte in Pfeilrichtung 49' definiert übertragen werden können. In die Mitnehmer 49' greifen kraftschlüssig Klauen einer Setzvorrichtung ein.

Fig. 4a zeigt einen Schnitt IVa - IVa der Fig. 4. In Draufsicht ist die Ausbildung des Setzkopfes 45 gezeigt, und der Bohrerschaft 41 ist geschnitten. Die Flächen 46, 47 sind zu erkennen. Die Flächen 46, 47 können auch als Vier-, Sechs- oder Achteck die Umfangsflächen des Setzkopfes 45 bilden.

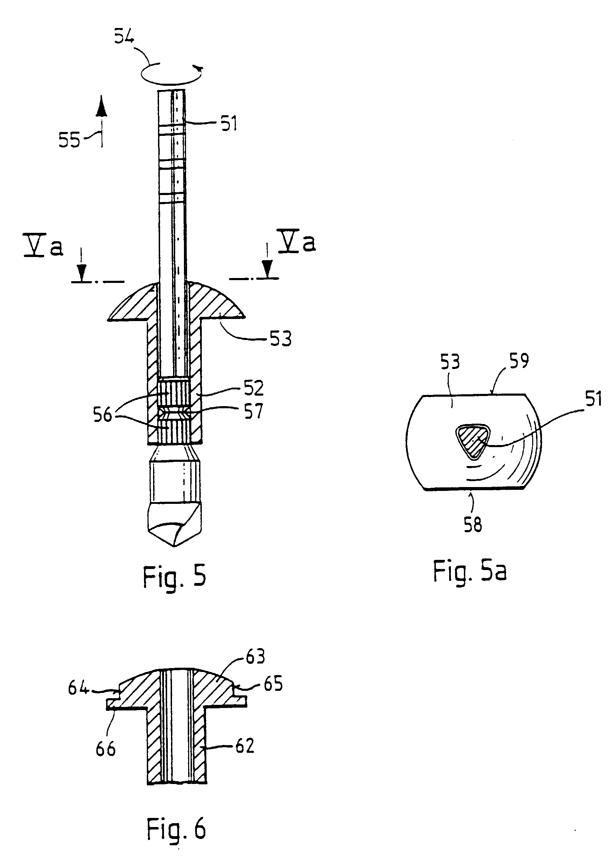

Fig. 5 zeigt eine weitere Ausbildung eines erfindungsgemäßen Selbstbohrhohlniets mit einem ovalen bis dreieckförmigen Schaftquerschnitt eines Bohrerschaftes 51, der in eine Öffnung einer Niethülse 52 greift und sie von einem Ende bis zum anderen Ende durchdringt. Die Öffnung der Niethülse 52 ist im Querschnitt der Querschnittsform des Bohrerschaftes 51 mit dem notwendigen Spiel angepaßt. Ist die Querschnittsform des Bohrerschaftes 51 an die Querschnittsform der Niethülse 52 angepaßt, so ist durch diese Ausgestaltung bezüglich einer Drehbewegung in Pfeilrichtung 54 ein Kraftschluß sichergestellt. Ebenfalls kann ein derartig ausgebildeter Bohrerschaft 51 in der Setzvorrichtung nicht undefiniert verdrehen oder verrutschen. Nicht näher bezeichnete Ringnuten sind am Bohrerschaft 51 deshalb vorgesehen, damit der Bohrerschaft 51, nachdem der Bohrvorgang beendet ist, in Pfeilrichtung 55 gezogen werden kann, um die Ausbildung des Schließkopfes zu bewirken. Rippen oder Noppen 56, die auch als Rotationsmitnehmer dienen, halten den Bohrerschaft 51 unverlierbar in der Niethülse 52. Weiterhin ist am Bohrerschaft 51 eine Sollbruchstelle 57 ausgebildet.

Fig. 5a zeigt einen Schnitt Va - Va der Fig. 5, und es ist dort deutlich gezeigt, wie die Querschnittsform des Bohrerschaftes 51 und die Öffnung der Niethülse 52 bzw. der Durchgang durch den Setzkopf 53 aneinander angepaßt sind. Flächen 58, 59, die zusätzlich am Setzkopf 53 ausgebildet sind, dienen als Rotationsmitnehmer.

Fig. 6 zeigt eine weitere Ausbildung eines Setzkopfes 63 mit einer Niethülse 62. Am Außenumfang des Setzkopfes 63 sind Flächen 64, 65 achsprallel zur Niethülse 62 als Rotationsmitnehmer ausgebildet. An die Flächen 64, 65 grenzt ein Absatz 66, der als plane Auflagefläche für Stirnflächen der Setzvorrichtung dient.

Ein Selbstbohrhohlniet 10 weist einen Bohrer 11 und eine Niethülse 12 auf, die ein erstes und ein zweites Bauteil 16, 17 verbindbar zusammenhalten soll. Um die Bauteile 16 und 17 unlösbar miteinander zu verbinden, wird in einem ersten Arbeitsvorgang ein Nietloch 15 mit dem Bohrer 11 gebohrt. Der Bohrer 11 ist über Rippen 19', 19" formschlüssig und kraftschlüssig in der Niethülse 12 gehalten. An einem Setzkopf 20 sind am Außenumfang des Setzkopfes 20 abgeflachte Flächen vorgesehen, in die eine Setzvorrichtung eingreift. Die Setzvorrichtung versetzt den Selbstbohrhohlniet in Drehung. Die Rotationskräfte werden gleichmäßig von dem Selbstbohrhohlniet 12 auf den Bohrer 11 über die Rotationsmitnehmer 19', 19" übertragen, ohne daß beim Bohrvorgang der Bohrerschaft 18 an der Sollbruchstelle 19 abreißt. Nachdem der Bohrvorgang abgeschlossen ist, wird in einem zweiten Arbeitsvorgang der Selbstbohrhohlniet 10 gesetzt, in dem der Bohrerschaft 18 in Pfeilrichtung 20' gezogen wird. Dabei greifen in die Ringnuten 27 Greifer der Setzvorrichtung ein. Bei diesem Setzvorgang wird der Bohrkopf 14 in die Niethülse 12 hineingezogen und die Niethülse 12 umschließt den Bohrkopf 14 nahezu vollkommen. Der Schließkopf ist ausgebildet, und der Hohlniet ist dicht verschlossen.

## Patentansprüche

1. Selbstbohrhohlniet, bestehend aus einer Niethülse (12; 30; 44; 52; 62), die an einem Ende einen Setzkopf (20; 45; 53; 63) aufweist, und am anderen Ende als Schließkopf (23) ausbildbar ist, mit einem die Niethülse (12; 30; 44; 52; 62) axialdurchsetzenden Bohrerschaft (18; 31; 41; 51), der beidseits einer Sollbruchstelle (19; 37; 48; 57) Rotationsmitnehmer (19'; 35; 42; 56) aufweist und einenends mit einem Bohrkopf (14; 32) und andernends am Bohrerschaft (18; 41; 51) mit Zugmitnehmern (27; 49) für eine Setzvorrichtung versehen ist, wobei sich der Bohrkopf (14; 32) zur Niethülse (12; 44; 52; 62) bzw. zum Niethülsenabschnitt (30) hinweisend verjüngt,
dadurch gekennzeichnet,
daß die Rotationsmitnehmer (19', 19"; 35, 36; 42; 56) sich in das Material der Niethülse (12; 30; 44; 52; 62) eindrücken, daß die Rotationsmitnehmer (19'; 35; 42; 56) absatzfrei an die Verjüngung angrenzen, daß der Setzkopf (20; 45; 53) am Außenumfang mindestens zwei abgeflachte Flächen (46, 47; 58, 59; 64, 65) aufweist, die parallel zur Ebene einer Bohrerachse (24) verlaufen, daß die Rotationsmitnehmer (19', 19"; 35, 36; 42; 56) als Rippen ausgebildet sind, die einen dreieckförmigen Querschnitt aufweisen und in Längsrichtung über nahezu die gesamte Länge gleichmäßig weit von der Oberfläche des Bohrerschaftes (18; 31; 41; 51) beabstandet sind und daß der Bohrerschaft (18; 31; 41; 51;) unverlierbar in der Niethülse (12; 30; 44; 52; 62) gehalten ist.

2. Selbstbohrhohlniet nach Anspruch 1, dadurch gekennzeichnet, daß der Bohrerschaft (18; 31; 41; 51; 62) und der Bohrkopf (14; 32) einstückig gefertigt ist und daß sowohl der Bohrkopf (14; 32) wie auch der Bohrerschaft (18; 31; 41; 51) aus einem gehärteten Material besteht.

3. Selbstbohrhohlniet nach Anspruch 1 oder 2, dadurch gekennzeichnet, daß die Niethülse (12; 44; 52) bzw. der Niethülsenabschnitt (30) an einer Innenwand (43) einen Dichtfilm aufweist und daß unterhalb des Setzkopfes (20) eine Dichtung (22) angeordnet ist.

4. Selbstbohrhohlniet nach einem der Ansprüche 1 bis 3, dadurch gekennzeichnet, daß sich die abgeflachten Flächen (46, 47; 58, 59) am Außenumfang des Setzkopfes (20; 45; 53) über die gesamte Materialstärke des Setzkopfes (45; 53) achsparallel zur Niethülse (44; 52) erstrecken oder daß die abgeflachten Flächen (58, 59) am Setzkopf (63) an einen Absatz (66) grenzen.

## Claims

1. Self-drilling hollow rivet comprising a rivet bushing (12;30;44;52;62) exhibiting a set-head (20;45;53;63) on one end and being configurable as a closing head (23) on the other end, with a drill shaft (18;31;41;51) axially penetrating through the rivet bushing (12;30;44;52;62) which exhibits rotation carriers (19';35;42;56) on both ends of an intended breaking location (19;37;48;57) and on the one end is provided with a drill head (14;32) and on the other end at the drill shaft (18;31;41;51) is provided with tension carriers (27;49) for a setting apparatus, whereby the drill head (14;32) tapers towards the rivet bushing (12;44;52;62) or the rivet bushing section (30),
characterized in
that the rotation carriers (19';19";35;36;42;56) press into the material of the rivet bushing (12;30;44;52;62), that the rotation carriers (19';35;42;56) border, without exhibiting a shoulder, on the taper, that the set-head (20;45;53) exhibits at least two flattened surfaces (46,47;58,59;64,65) on the outer perimeter which run parallel to the plane of a drill axis (24), that the rotation carriers (19',19";35,36;42;56) are configured as rips which exhibit a triangular-shaped cross section and which are equally distanced from the surface of the driff shaft (18;31;41;51) along the longitudinal direction over nearly the entire length and that the drill shaft (18;31;41;51) is securely held in the rivet bushing (12;30;44;51;62).

2. Self-drilling hollow rivet according to claim 1, characterized in that the drill shaft (18;31;41;51;62) and the drill head (14;32) are manufactured as a single piece and the drill head (14;32) as well as the drill shaft (18;31;41;51) are formed from a hardened material.

3. Self-drilling hollow rivet according to claim 1 or 2, characterized in that the rivet bushing (12;44,52) or the rivet bushing section (30) exhibit a sealing film on an inner wall (43) and a seal (22) is arranged below the set-head (20).

4. Self-drilling hollow rivet according to one of the claims 1 to 3, characterized in that the flattened surfaces (46,47;58,59) stretch along the entire material thickness of the set-head (45;53) parallel to the axis of the rivet bushing (44;52) or that the surfaces (58,59) border on a shoulder (66) at the set-head (63).

## Revendications

1. Rivet tubulaire autoforeur, comprenant une douille (12; 30; 44; 52; 62), qui, à une extrémité, présente une tête de pose (20; 45; 53; 63), et, à l'autre extrémité, peut être réalisée sous la forme d'une tête de fermeture (23), et une tige de foret (18; 31; 41; 51) qui traverse axialement la douille de rivet (12; 30; 44; 52; 62) et présente, de part et d'autre d'un emplacement destiné à la rupture (19; 37; 48; 57), des moyens d'entraînement en rotation (19'; 35; 42; 56) et qui est pourvue, à une extrémité, d'une tête de forage (14; 32) et, à l'autre extrémité de la tige de foret (18; 41; 51), de moyens d'entraînement en traction (27; 49) pour un dispositif de pose, la tête de forage (14; 32) s'amincissant en direction de la douille de rivet (12; 44; 52; 62) ou respectivement d'une section de douille de rivet (30),
caractérisé en ce que les moyens d'entraînement en rotation (19', 19"; 35, 36; 42; 56) s'enfoncent dans la matière de la douille de rivet (12; 30; 44; 52; 62), en ce que les moyens d'entraînement en rotation (19'; 35; 42; 56) sont contigus sans interruption à l'amincissement, en ce que la tête de pose (20; 45; 53) présente sur la périphérie externe au moins deux surfaces aplaties (46, 47; 58, 59; 64, 65) qui s'étendent parallèlement au plan d'un axe du foret (24), en ce que les moyens d'entraînement en rotation (19', 19"; 35, 36; 42; 56) sont réalisés sous la forme de cannelures qui présentent une section transversale triangulaire et sont, en direction longitudinale sur presque toute la longueur, uniformément largement espacées de la surface de la tige de foret (18; 31; 41; 51), et en ce que la tige de foret (18; 31; 41; 51) est maintenue de manière imperdable dans la douille de rivet (12; 30; 44; 52; 62).

2. Rivet tubulaire autoforeur suivant la revendication 1, caractérisé en ce que la tige de foret (18; 31; 41; 51; 62) et la tête de forage (14; 32) sont fabriquées d'une pièce et en ce qu'aussi bien la tête de forage (14; 32) que la tige de foret (18; 31; 41; 51) sont constituées d'une matière durcie.

3. Rivet tubulaire autoforeur suivant l'une des revendications 1 et 2, caractérisé en ce que la douille de rivet (12; 44; 52) ou respectivement la section de douille de rivet (30) présente sur une paroi interne (43) un film d'étanchéité et en ce qu'un élément d'étanchéité (22) est disposé en dessous de la tête de pose (20).

4. Rivet tubulaire autoforeur suivant l'une des revendications 1 à 3, caractérisé en ce que les surfaces aplaties (46, 47; 58, 59) s'étendent sur la périphérie externe de la tête de pose (20; 45; 53) parallèlement à l'axe de la douille de rivet (44; 52) sur la totalité de l'épaisseur de matière de la tête de pose (45; 53), ou en ce que les surfaces aplaties (58, 59) sont, sur la tête de pose (63), adjacentes à un gradin (66).
